# EUROPÄISCHE PATENTSCHRIFT

(11) **EP 1 261 825 B1**
(45) Veröffentlichungstag und Bekanntmachung des Hinweises auf die Patenterteilung: **08.12.2004**
(21) Anmeldenummer: 02716655.2
(22) Anmeldetag: 11.01.2002
(51) Int. Cl.: F16K 31/06

(54) **MIKROVENTIL**
MICRO-VALVE
MICROSOUPAPE

(30) Priorität: 11.01.2001 DE 20100471 U
(43) Veröffentlichungstag der Anmeldung: 04.12.2002
(73) Patentinhaber: Bürkert Werke GmbH & Co., D-74653 Ingelfingen (DE)
(72) Erfinder: HETTINGER, Christoph, 74653 Ingelfingen (DE); HOCHHOLDINGER, Ernst, 74676 Niedernhall (DE)
(74) Vertreter: Degwert, Hartmut, Dipl.-Phys.
(86) Internationale Anmeldenummer: PCT/EP2002/000228
(87) Internationale Veröffentlichungsnummer: WO 2002/061313

(56) Entgegenhaltungen:
- US-A- 5 139 226
- US-A- 5 653 422
- US-A- 5 762 097

## Beschreibung

Die Erfindung betrifft ein Mikroventil mit einem Antriebsgehäuse, in dem ein Magnetantrieb mit wenigstens einer Magnetspule und einem durch diese betätigbaren Anker angeordnet ist, einem an das Antriebsgehäuse angesetzten Flanschgehäuse, in dem wenigstens ein Ventilsitz gebildet ist, und einer zwischen Antriebsgehäuse und Flanschgehäuse angeordneten Membran, die durch eine mit dem Anker gekoppelte Schaltwippe gegen den Ventilsitz andrückbar ist.

Bei einem Mikroventil wirken sich Fertigungstoleranzen umso gravierender aus, je kompakter sie gebaut werden, da die durch den Antrieb des Ventils, vorzugsweise eine Magnetspule, erreichbaren Betätigungskräfte mit dem geringer werdenden Bauvolumen stark abnehmen, während die Fertigungstoleranzen der Bauteile relativ zunehmen.

Durch die Erfindung wird ein äusserst kompaktes Mikroventil geschaffen, bei dem insbesondere an der Schnittstelle zwischen Antrieb und Schaltwippe Toleranzen vermieden werden, um eine weitere Miniaturisierung bei möglichst gleichbleibenden technischen Daten und geringen Herstellkosten zu erreichen.

Gemäss der Erfindung weist die Schaltwippe ein Schwenklager auf, das eine bestimmte Position einnimmt und dessen Achse unmittelbar an einer dem Antriebsgehäuse zugewandten Anlagefläche des Flanschgehäuses anliegt. Es entfallen somit die Bauteil- und Fertigungstoleranzen, die bei einer Lagerung der Schaltwippe im oder am Antriebsgehäuse unvermeidlich wären.

Bei vorteilhaften Weiterbildungen der Erfindung werden durch eine optimale Raumausnutzung und sinnvolle Anordnung von Magnetspulen und Eisenjoch trotz reduziertem Bauvolumen des Mikroventils die erreichbaren Schaltkräfte erhöht und damit die Leistungsdaten der nächst grösseren Ventilbauart erreicht bzw. übertroffen.

Weiterhin ist bei der bevorzugten Ausführungsform des Mikroventils der mediumsberührte Raum durch die Membran hermetisch vom Antriebsteil getrennt, wodurch es aufgrund des beim Betätigen der Membran wirkenden Walkwiderstands zu einer zusätzlichen Erhöhung der erforderlichen Betätigungskräfte kommt.

Bei einer ersten Bauform des Mikroventils ist der Anker nicht - wie bei bekannten Ausführungen - im Antriebsgehäuse, sondern unmittelbar an oder in der Magnetspule schwenkbar gelagert, wodurch die seiner Verschwenkung entgegenwirkende Reibung reduziert wird.

Bei einer zweiten Bauform des Mikroventils ist der Anker einteilig mit der Schaltwippe ausgeführt und dadurch mit dieser an der Anlagefläche des Flanschgehäuses gelagert, wodurch weitere Bauteil- und Fertigungstoleranzen sowie Reibung zwischen Anker und Schaltwippe vermieden werden.

Weitere Merkmale und Vorteile der Erfindung ergeben sich aus der nachfolgenden Beschreibung und den beigefügten Zeichnungen. In den Zeichnungen zeigen:
**Figur 1** den Gesamtaufbau des Mikroventils in Schnittansicht bei einer Ausführung mit Schaltwippe und Anker als getrennten Bauteilen;
**Figur 2** eine Perspektivansicht des Mikroventils;
**Figur 2a** eine Detailansicht, die eine Lagerausnehmung im Antriebsgehäuse und eine Anlagefläche am Flanschgehäuse zeigt;
**Figur 3** eine Detailansicht, die eine Schaltwippe mit Lagerzapfen zeigt; und
**Figur 4** den Gesamtaufbau des Mikroventils in Schnittansicht bei einer Ausführungsform mit Schaltwippe und Anker als einheitlichem Bauteil.

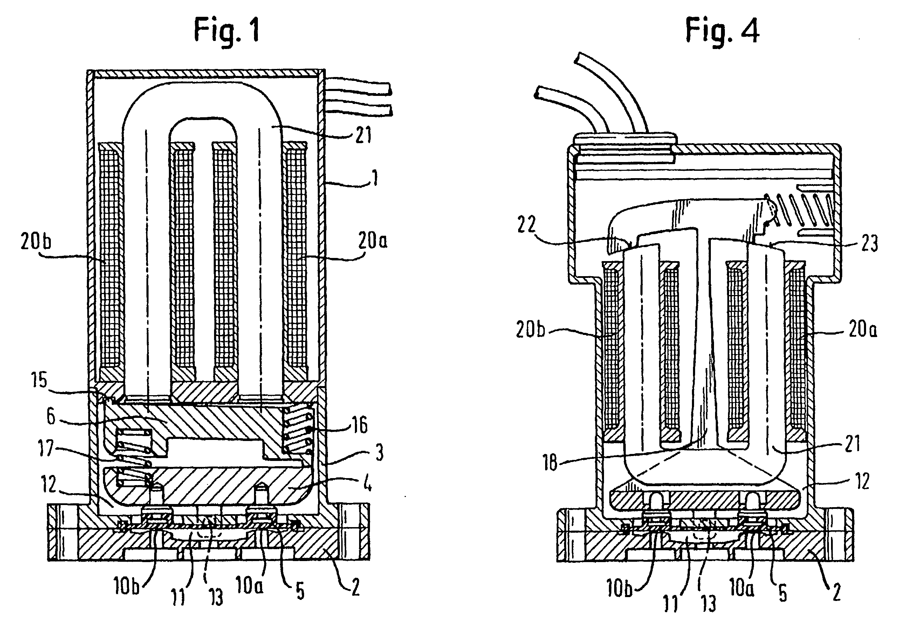

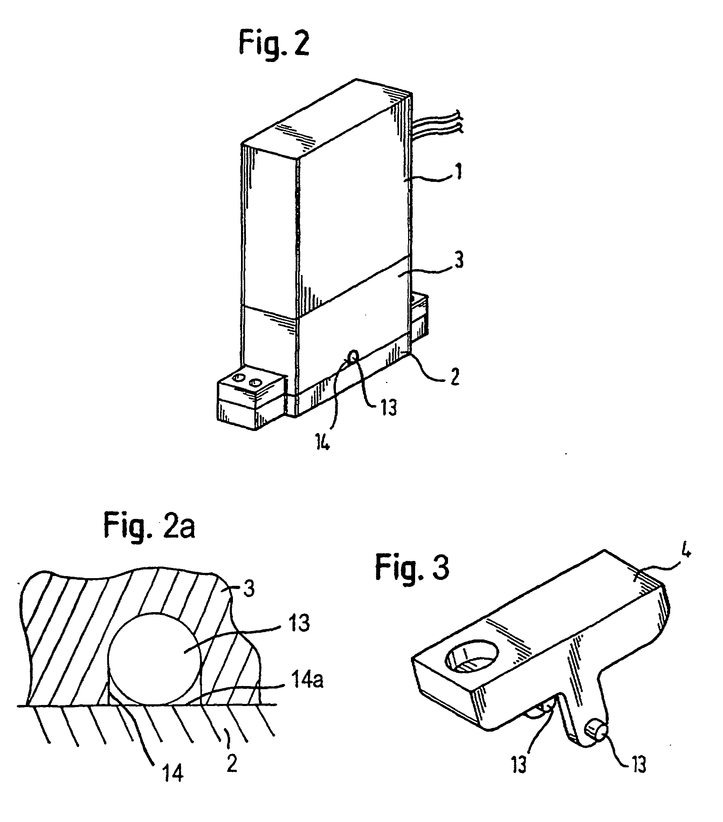

Bei der in den Fig. 1 bis 3 gezeigten Ausführungsform besteht das Mikroventil aus einer Magnetspule 1, einem Flanschgehäuse 2, einem Antriebsgehäuse 3, einer Schaltwippe 4, einer Membran 5 und einem Anker 6. In das Flanschgehäuse sind die Ventilsitze 10a, 10b eingearbeitet. Die Membran 5 trennt den mediumsberührten Teil des Ventils 11 von dem Antriebsteil 12. Die Membran wird über die Schaltwippe betätigt, die zwei Lagerstifte 13 enthält, die in einer halbrundförmigen Ausnehmung 14 an der Unterseite des Antriebsgehäuses fixiert sind und die direkt auf einer Anlagefläche 14a des Flanschgehäuses 2 aufliegen. Auf die Schaltwippe 4 wird von dem in einem Schwenklager 15 gelagerten Anker 6 mittels einer Druckfeder 16 eine Kraft ausgeübt, welche die mit der Schaltwippe verbundene Membran 5 auf den im Flanschgehäuse sich befindlichen Ventilsitz 10a drückt und dadurch diesen verschliesst. Beim Anlegen von Spannung an der Magnetspule 1 wird eine magnetische Kraft erzeugt, die eine Schwenkbewegung des Ankers 6 verursacht. Der Anker 6 gibt die Schaltwippe 4 frei, die ihrerseits von einer zweiten Druckfeder 17 beaufschlagt, eine Schwenkbewegung ausführt und die Membran 5 von dem stromlos geschlossenen Ventilsitz 10a abhebt und andererseits den stromlos geöffneten Ventilsitz 10b verschliesst.

Zur Vermeidung von Toleranzen wird in vorliegender Erfindung die Schaltwippe nicht wie üblich über einen Lagerstift in einer im Antriebsgehäuse eingebrachten Bohrung gelagert, sondern die Lagerstifte 13 der Schaltwippe 4 liegen direkt an der Anlagefläche 14a des Flanschgehäuses 2 auf, in das die Ventilsitze eingebracht sind. Dadurch entfallen die durch eine zusätzliche Bohrung im Antriebsgehäuse entstehenden Toleranzen. Ferner reduziert sich dadurch der Abstand zwischen dem Drehpunkt der Schaltwippe und der Oberkante der Ventilsitze, so dass die Membran beim Abdichten der beiden Ventilsitze eine weitaus geringere Querbewegung auf den Ventilsitzen ausführt als dies bei bekannten Konstruktionen mit in einer Bohrung im Antriebsgehäuse gelagerten Schaltwippe der Fall ist, was die zum Abdichten der Ventilsitze erforderlichen Betätigungskräfte der Membran verringert.

Bei der zweiten Ausführungsform des Mikroventils, die in Fig. 4 dargestellt ist, sind Schaltwippe und Anker zu einem einzigen Drehanker 18 zusammengefasst. Der Antrieb weist ein U-förmiges Joch 21 auf, dessen Steg dem Flanschgehäuse 2 zugekehrt ist. Der Drehanker 18 ist in gleicher Weise wie die Schaltwippe 4 bei der ersten Ausführungsform gelagert. Der Drehanker 18 ist ferner allgemein hammerförmig ausgebildet, mit einem starr mit der Schaltwippe verbundenen Schaft, der sich zwischen den Schenkeln des Jochs erstreckt, und einem Hammerkopf, der Polflächen aufweist, die den freien Endflächen 22, 23 der Schenkel des Jochs gegenüberliegen und wie diese mit einem Radius gekrümmt sind, der dem Abstand von der Achse des Schwenklagers der Schaltwippe entspricht. Auf die beiden Schenkel des Jochs ist je eine Magnetspule 20a, 20b aufgeschoben. Sobald durch die beiden Spulen 20a, 20b ein Strom fließt, entsteht im Joch 21 ein Magnetfeld, das das Bestreben hat, den in Ruhestellung ausgelenkten Drehanker in Überdeckung mit den beiden Jochschenkeln zu bringen, wodurch im Drehanker ein Drehmoment erzeugt wird, das wiederum die Membran 5 bewegt. Der Verlauf des Drehmoments über den Drehwinkel kann durch eine entsprechende Gestaltung der während der Drehbewegung sich gegenüberliegenden Flächen 22, 23 von Drehanker und Joch variiert werden, wodurch neben der Öffnungs- und Schließfunktion des Ventils auch ein zur angelegten Stromstärke annähernd proportional verlaufender Drehwinkel des Drehankers erreicht werden kann, so dass das Ventil auch als Regelventil eingesetzt werden kann. Im Vergleich zu bekannten Wippenventilen und zu dem oben beschriebenen Funktionsprinzip, bei denen ein in einem Drehpunkt gelagerten Anker eine Drehbewegung auf die Schaltwippe überträgt, wobei die Kontaktstelle zwischen Anker und Schaltwippe naturgemäß reibungsbehaftet ist, entstehen bei dieser Ausführungsform außer in der Lagerstelle des Drehankers keine zusätzlichen Reibverluste; außerdem schaltet das Ventil dadurch annähernd geräuschfrei.

Zur Erzeugung der Magnetkraft werden die auf dem U-förmig gebogenen Joch 21 aufgeschobenen Spulen 20a, 20b vorzugsweise in Reihe geschaltet, um den durch das fluidische Prinzip vorgegebenen, rechteckigen Bauraum optimal auszunutzen und das Breitenmaß des Ventils möglichst klein zu halten. Um die Leistungsdaten des Ventils weiter zu steigern, können durch eine geeignete elektronische Schaltung für eine kurze Zeit während des Schaltvorgangs des Ventils beide Spulen parallel geschaltet werden. Dadurch wird eine kurzzeitige Erhöhung der Magnetkraft erreicht, die ausreicht, um den Anker anzuziehen. Sobald der Anker 6 an der Spule 1 anliegt, steigt aufgrund des geringen Luftspalts zwischen Anker und Spule die Magnetkraft des Magneten stark an, so dass dann die beiden Spulen zur Vermeidung von übermäßiger Erwärmung wieder hintereinander geschaltet werden können.

## Patentansprüche

1. Mikroventil mit einem Antriebsgehäuse (3), in dem ein Magnetantrieb mit wenigstens einer Magnetspule (1) und einem durch diese betätigbaren Anker (6) angeordnet ist, einem an das Antriebsgehäuse angesetzten Flanschgehäuse (2), in dem wenigstens ein Ventilsitz (10a, 10b) gebidet ist, und einer zwischen Antriebsgehäuse (3) und Flanschgehäuse (2) angeordneten Membran (5), die durch eine mit dem Anker (6) gekoppelte Schaltwippe (4) gegen den Ventilsitz andrückbar ist, **dadurch gekennzeichnet, dass** die Schaltwippe ein Schwenklager aufweist, das eine bestimmte Position einnimmt, und dessen Achse (13) unmittelbar an einer dem Antriebsgehäuse zugewandten Anlagefläche des Flanschgehäuses anliegt.

2. Mikroventil nach Anspruch 1, **dadurch gekennzeichnet, dass** die Schaltwippe wenigstens einen Lagerzapfen aufweist, der auf der Anlagefläche des Flanschgehäuses gelagert ist.

3. Mikroventil nach Anspruch 1 oder 2, **dadurch gekennzeichnet, dass** die Anlagefläche des Flanschgehäuses im wesentlichen eben ist.

4. Mikroventil nach einem der Ansprüche 1 bis 3, **dadurch gekennzeichnet, dass** das Schwenklager Radialführungsflächen aufweist, die gemeinsam durch die Anlagefläche des Flanschgehäuses und Anlageflächen des Antriebsgehäuses gebildet sind.

5. Mikroventil nach einem der vorstehenden Ansprüche, **dadurch gekennzeichnet, dass** der Anker mit der Schaltwippe verbunden oder einteilig mit ihr ausgeführt und durch sie gelagert ist.

6. Mikroventil nach Anspruch 5, **dadurch gekennzeichnet, dass** der Magnetantrieb ein U-förmiges Joch mit einem dem Flanschgehäuse zugekehrten Steg und zwei durch den Steg verbundenen Schenkeln aufweist, dass der Anker allgemein hammerförmig ausgebildet ist und einen starr mit der Schaltwippe verbundenen, sich zwischen den Schenkeln erstreckenden Schaft und einen an dessen freiem Ende angeschlossenen Hammerkopf aufweist, der Polflächen aufweist, die den freien Endflächen der Schenkel gegenüberliegen.

7. Mikroventil nach Anspruch 6, **dadurch gekennzeichnet, dass** die Polflächen des Hammerkopfes und die freien Endflächen der Schenkel gemäß einem Kreisbogen um die Achse des Schwenklagers gekrümmt sind.

8. Mikroventil nach Anspruch 6 oder 7, **dadurch gekennzeichnet, dass** der Anker durch eine zwischen der Innenfläche des Antriebsgehäuses und dem Hammerkopf des Ankers abgestützte Druckfeder in eine Ruhestellung belastet ist.

9. Mikroventil nach einem der Ansprüche 6 bis 8, **dadurch gekennzeichnet, dass** der Schaft von der Schaltwippe zum Hammerkopf hin verjüngt ausgebildet ist.

10. Mikroventil nach einem der Ansprüche 1 bis 4, **dadurch gekennzeichnet, dass** der Magnetantrieb ein U-förmiges Joch mit einem von dem Flanschgehäuse abgekehrten Steg und zwei durch den Steg verbundenen Schenkeln aufweist, dass der Anker schwenkbr in Gegenüberlage zu den freien Enden der Schenkel des Jochs gelagert ist und dass der Anker durch eine Druckfeder mit der Schaltwippe gekoppelt ist.

11. Mikroventil nach Anspruch 10, **dadurch gekennzeichnet, dass** der Anker durch eine Druckfeder in eine Ruhestellung vorbelastet ist.

12. Mikroventil nach einem der Ansprüche 6 bis 11, **dadurch gekennzeichnet, dass** auf jedem Schenkel des U-förmigen Jochs eine Magnetspule angebracht ist und die Magnetspulen kurzzeitig zur Erzeugung einer Schaltkraft elektrisch in Parallelschaltung und zur Erzeugung einer Haltekraft in Reihenschaltung betreibbar sind.

13. Anwendung eines Mikroventils nach einem der Ansprüche 6 bis 9, wobei die den Magnetspulen zugeführte elektrische Stromstärke dem Schwenkwinkel des Ankers nachgeregelt wird.

## Claims

1. A microvalve comprising a drive housing (3) in which a magnetic drive is arranged that includes at least one solenoid (1) and an armature (6) adapted to be actuated by the solenoid, a flanged housing (2) which is mounted against the drive housing and in which at least one valve seat (10a, 10b) is formed, and a diaphragm (5) which is arranged between the drive housing (3) and the flanged housing (2) and is adapted to be pressed against the valve seat by means of a commutation rocker (4) coupled to the armature (6), **characterized in that** the commutation rocker has a pivot bearing which assumes a specific position and the axis (13) of which is in direct contact with a seating surface of the flanged housing facing the drive housing.

2. The microvalve according to claim 1, **characterized in that** the commutation rocker has at least one bearing pin supported on the seating surface of the flanged housing.

3. The microvalve according to claim 1 or 2, **characterized in that** the seating surface of the flanged housing is substantially planar.

4. The microvalve according to any of claims 1 to 3, **characterized in that** the pivot bearing has guidance faces for radial guiding which are formed jointly by the seating surface of the flanged housing and by seating surfaces of the drive housing.

5. The microvalve according to any of the preceding claims, **characterized in that** the armature is connected with the commutation rocker or formed in one piece therewith and is supported by it.

6. The microvalve according to claim 5, **characterized in that** the magnetic drive includes a U-shaped yoke having a web facing the flanged housing and two legs that are connected by the web, that the armature generally has the shape of a hammer and comprises a shank which is rigidly connected with the commutation rocker and extends between the legs, as well as a hammer head linked to the free end of the shank, the hammer head including pole faces which are opposite the free end faces of the legs.

7. The microvalve according to claim 6, **characterized in that** the pole faces of the hammer head and the free end faces of the legs are curved along a circular arc about the axis of the pivot bearing.

8. The microvalve according to claim 6 or 7, **characterized in that** the armature is biased into a position of rest by means of a compression spring which is supported between the inner surface of the drive housing and the hammer head of the armature.

9. The microvalve according to any of claims 6 to 8, **characterized in that** the shank is configured so as to be tapered from the commutation rocker towards the hammer head.

10. The microvalve according to any of claims 1 to 4, **characterized in that** the magnetic drive includes a U-shaped yoke having a web facing away from the flanged housing and two legs connected by the web, that the armature is pivotally mounted in a position opposite the free ends of the legs of the yoke, and that the armature is coupled to the commutation rocker by means of a compression spring.

11. The microvalve according to claim 10, **characterized in that** the armature is biased into a position of rest by means of a compression spring.

12. The microvalve according to any of claims 6 to 11, **characterized in that** each leg of the U-shaped yoke has a solenoid mounted thereon and that the solenoids can be operated for a short time in electrical parallel connection for generating a commutation force, and can be operated in series connection for generating a holding force.

13. Use of a microvalve according to any of claims 6 to 9, the electrical current intensity delivered to the solenoids being controlled in a closed loop in response to the pivot angle of the armature.

## Revendications

1. Microvalve comportant un boîtier d'entraînement (3) dans lequel est agencé un entraînement magnétique avec au moins une bobine magnétique (1) et un induit (6) actionnable par celle-ci, un boîtier à flasque (2) rapporté sur le boîtier d'entraînement et dans lequel est formé au moins un siège de valve (10a, 10b), et une membrane (5) agencée entre le boîtier d'entraînement (3) et le boîtier à flasque (2), qui peut être pressée contre le siège de valve par une bascule de commutation (4) accouplée à l'induit (6), **caractérisée en ce que** la bascule de commutation présente un palier pivotant qui prend une position déterminée et dont l'axe (13) est appliqué directement sur une surface d'appui du boîtier à flasque, qui est tournée vers le boîtier d'entraînement.

2. Microvalve selon la revendication 1, **caractérisée en ce que** la bascule de commutation présente au moins un tourillon qui est monté sur la surface d'appui du boîtier à flasque.

3. Microvalve selon la revendication 1 ou 2, **caractérisée en ce que** la surface d'appui du boîtier à flasque est sensiblement plane.

4. Microvalve selon l'une des revendications 1 à 3, **caractérisée en ce que** le palier pivotant présente des surfaces de guidage radial qui sont formées conjointement par la surface d'appui du boîtier à flasque et les surfaces d'appui du boîtier d'entraînement.

5. Microvalve selon l'une des revendications précédentes, **caractérisée en ce que** l'induit est relié à la bascule de commutation ou réalisé d'un seul tenant avec celle-ci et montée par elle.

6. Microvalve selon la revendication 5, **caractérisée en ce que** l'entraînement magnétique présente une culasse en forme de U avec une traverse tournée vers le boîtier à flasque et deux branches reliées par la traverse, **en ce que** l'induit est réalisé en général en forme de marteau et présente un fût relié de manière rigide avec la bascule de commutation et s'étendant entre les branches, et une tête de marteau raccordée à son extrémité libre, qui présente des faces polaires qui sont opposées aux faces d'extrémité libres des branches.

7. Microvalve selon la revendication 6, **caractérisée en ce que** les faces polaires de la tête de marteau et les faces d'extrémité libres des branches sont recourbées selon un arc de cercle autour de l'axe du palier pivotant.

8. Microvalve selon la revendication 6 ou 7, **caractérisée en ce que** l'induit est sollicité dans une position de repos par un ressort de compression soutenu entre la surface intérieure du boîtier d'entraînement et la tête de marteau de l'induit.

9. Microvalve selon l'une des revendications 6 à 8, **caractérisée en ce que** le fût est réalisé en se rétrécissant depuis la bascule de commutation jusqu'à la tête de marteau.

10. Microvalve selon l'une des revendications 1 à 4, **caractérisée en ce que** l'entraînement magnétique présente une culasse en forme de U avec une traverse détournée du boîtier à flasque et deux branches reliées par la traverse, **en ce que** l'induit est monté pivotant en position opposée aux extrémités libres des branches de la culasse et **en ce que** l'induit est accouplé à la bascule de commutation par un ressort de compression.

11. Microvalve selon la revendication 10, **caractérisée en ce que** l'induit est précontraint dans une position de repos par un ressort de compression.

12. Microvalve selon l'une des revendications 6 à 11, **caractérisée en ce que** sur chaque branche de la culasse en forme de U est disposée une bobine magnétique et **en ce que** les bobines magnétiques peuvent fonctionner électriquement en montage en parallèle, pour engendrer temporairement une force de commutation, et en montage en série, pour engendrer une force de retenue.

13. Application d'une microvalve selon l'une des revendications 6 à 9, dans laquelle l'intensité du courant électrique amené aux bobines magnétiques est réglée selon l'angle de pivotement de l'induit.
